(19) Europäisches Patentamt
European Patent Office
Office européen des brevets

(11) EP 3 260 488 B1

(12) EUROPEAN PATENT SPECIFICATION

(45) Date of publication and mention of the grant of the patent:
**01.04.2020 Bulletin 2020/14**

(21) Application number: **16752576.5**

(22) Date of filing: **19.02.2016**

(51) Int Cl.:
***C08L 11/02*** (2006.01)
***C08K 3/38*** (2006.01)
***C08K 5/17*** (2006.01)
***C08L 33/06*** (2006.01)
***C09J 11/06*** (2006.01)
***C09J 111/02*** (2006.01)
***C09J 133/00*** (2006.01)

(86) International application number:
**PCT/JP2016/054802**

(87) International publication number:
**WO 2016/133190 (25.08.2016 Gazette 2016/34)**

# (54) LATEX COMPOSITION AND ONE-PACK AQUEOUS ADHESIVE

LATEXZUSAMMENSETZUNG UND EINKOMPONENTIGER WÄSSRIGER KLEBSTOFF

COMPOSITION DE LATEX ET ADHÉSIF AQUEUX EN UN SEUL EMBALLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2015 JP 2015030658**

(43) Date of publication of application:
**27.12.2017 Bulletin 2017/52**

(73) Proprietor: **Denka Company Limited**
**Tokyo 103-8338 (JP)**

(72) Inventors:
- **SHIMANO Hirokazu**
**Itoigawa-city**
**Niigata 949-0393 (JP)**
- **MOCHIZUKI Kenji**
**Itoigawa-city**
**Niigata 949-0393 (JP)**
- **HAGIWARA Shogo**
**Itoigawa-city**
**Niigata 949-0393 (JP)**

(74) Representative: **Gulde & Partner**
**Patent- und Rechtsanwaltskanzlei mbB**
**Wallstraße 58/59**
**10179 Berlin (DE)**

(56) References cited:
**EP-A1- 2 508 560**
**WO-A1-98/53019**
**WO-A1-2011/065524**
**GB-A- 1 392 614**
**JP-A- 2004 043 666**
**JP-A- 2006 083 302**
**US-A1- 2009 053 949**
**US-A1- 2013 245 163**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 260 488 B1

## Description

### Technical Field

The present invention relates to a latex composition including a chloroprene polymer latex, an acrylic polymer latex, and a pH adjuster and to a one-pack aqueous adhesive including the latex composition.

### Background Art

Typical adhesives are made from raw material including vinyl acetate polymers, chloroprene polymers, acrylic ester polymers, natural rubbers, and urethane polymers. Of them, the chloroprene polymer gives high adhesive strength to a wide variety of adherends at low pressure and thus is suitably used for adhesives including solvent-based contact adhesives and graft adhesives. The solvent-based adhesive, however, has fire risk in a working environment and is costly to install special exhaust/recovery facilities for avoiding the risk. In addition, the Volatile Organic Compound (VOC) regulation and the solvent regulation have become stricter in consideration of environmental pollution and human health.

To eliminate solvents in order to meet the regulations, aqueous adhesives containing a chloroprene polymer latex have been developed, but the aqueous adhesives have lower adhesive strength than conventional solvent-based adhesives.

To address the problem, two-pack adhesives have been studied as a technique to improve the adhesive strength of an adhesive, specifically the adhesive strength at the initial state. For example, a two-pack adhesive including a main agent of a composition containing a particular polychloroprene latex together with an acrylic latex or an SBR latex and an anionic surfactant in particular amounts and a curing agent of a polyvalent metal salt has been disclosed (see Patent Documents 1 and 2). The two-pack adhesive is satisfactory when applied to an adherend by using a brush or a roller. However, when applied to an adherend by spraying, such an adhesive often causes troubles including an unfavorable balance between the pot life and the initial adhesive strength of the adhesive, an unstable mixing ratio of the adhesive, unstable adhesion operation, and clogging of a spray gun.

It is also known that a chloroprene polymer latex composition suitable for use in a one-pack aqueous adhesive having an excellent balance of initial adhesive strength, contact properties, storage stability, and spray coating properties can be produced by adding a particular acrylic polymer latex and a particular surfactant to a chloroprene polymer latex (see Patent Document 3).

Further, from the state of the art (see Patent Document 4), it is known: a chloroprene polymer latex composition comprising a chloroprene polymer latex (A), and an acrylic resin latex (B).

Further, from the state of the art (see Patent Document 5), a fast setting polychloroprene contact adhesive is known.

Further, from the state of the art (see Patent Document 6) low-viscosity, low-monomer aqueous polymer dispersions based on polychloroprene, and a process for the preparation thereof and the use thereof as a contact adhesive are known.

Further, from the state of the art (see Patent Document 7) it is known: A process for preparing aqueous compositions, particularly aqueous dispersions based on silicon dioxide, and for preparing adhesive or coating formulations using the aqueous com-positions as a component, and for production of adhesive layers and bonding of substrates coated on one side or both sides by spray application using the compositions.

Further, from the state of the art (see Patent Document 8) an adhesive-cement composition improving the bonding strengths of certain elastomeric lattices are known.

Further, from the state of the art (see Patent Document 9) a water-based adhesive containing a chloroprene latex as a main component, having a certain stability of viscosity with time and temperature dependence is known.

### Citation List

#### Patent Literature

[Patent Document 1] JP-A No. 56-59874
[Patent Document 2] JP-A No. 9-188860
[Patent Document 3] Japanese Patent Application No. 2009-271802
[Patent Document 4] EP 2 508 560 A1
[Patent Document 5] WO 98/53019 A1
[Patent Document 6] US 2009/053949 A1
[Patent Document 7] US 2013/245163 A1
[Patent Document 8] GB 1 392 614 A

[Patent Document 9] JP 2006 083302 A

Summary of the Invention

Technical Problem

The present invention has an object to provide a latex composition suitable for use in a one-pack aqueous adhesive that has an excellent balance of excellent initial adhesive strength, storage stability, and spray coating properties and gives a soft adhesive layer after drying and to provide a one-pack aqueous adhesive including the latex composition.

Solution to Problem

As a result of intensive studies to solve the above problems, the inventors of the present invention have found that the problems can be solved by adding a particular acrylic polymer latex (emulsion) and a particular pH adjustor to a chloroprene polymer latex.

In other words, the present invention is a method for producing a latex composition comprising the steps: adding (C) a pH adjustor to (A) a chloroprene polymer latex, and then blending (B) an acrylic polymer latex, wherein the latex composition comprises:

(A) the chloroprene polymer latex;
(B) the acrylic polymer latex; and
(C) the pH adjustor,

wherein (A) the chloroprene polymer latex contains a chloroprene polymer,
wherein (B) the acrylic polymer latex contains an acrylic polymer having a glass transition temperature of -40 to -10°C,
wherein (C) the pH adjustor is 3 to 6 parts by mass of boric acid or at least one compound selected from amino acids having an isoelectric point of 5.5 to 6.5,
wherein the rate of (A) the chloroprene polymer latex in the latex composition is 50 to 85% by mass in terms of solid content, and
wherein the rate of (B) the acrylic polymer latex in the latex composition is 15 to 50% by mass in terms of solid content.

It is preferable that the chloroprene polymer be a chloroprene homopolymer, a copolymer of chloroprene and 2,3-dichloro-1,3-butadiene, or a mixture of a chloroprene homopolymer and a copolymer of chloroprene and 2,3-dichloro-1,3-butadiene, and that the chloroprene polymer has a gel content (toluene-insoluble content) of 5 to 30% by mass or less, and a toluene-soluble component has an number average molecular weight of 200,000 to 500,000 and a molecular weight distribution (Mw/Mn) of 2.0 to 4.0.

It is preferable that the chloroprene polymer has a polymerization conversion rate of monomer of not less than 65% by mass and less than 90% by mass.

It is preferable that a dry sheet prepared by drying the latex composition has a durometer hardness (type A) defined by JIS K 6253-3 of 30 to 80.

The latex composition is usable as a one-pack aqueous adhesive.

Advantageous Effects of Invention

A latex composition of the present invention maintains a high crystallization speed that is an inherent property of a chloroprene polymer latex as well as improves initial adhesive strength and contact properties without deterioration of storage stability and spray coating properties, and thus is useful as a composition for a one-pack aqueous adhesive. In particular, an adhesive layer after drying is soft, and thus the composition can be used suitably as a one-pack aqueous adhesive when at least one adherend of two adherends to be bonded is a soft material including furniture such as a sofa, a bed, and a chair, construction materials, toys such as a stuffed toy, and foams such as an automobile interior, and such a soft material is bonded to lumber or leather materials, or foams are bonded to each other.

Description of Embodiments

The present invention will now be described in detail.

A chloroprene polymer latex composition of the present invention is characterized by including (A) a chloroprene polymer latex, (B) a latex of an acrylic polymer having a glass transition temperature of -40 to -10°C, and (C) a particular pH adjustor at a predetermined ratio.

(A) Chloroprene polymer latex

The chloroprene polymer latex is added in order to improve the contact properties, heat-resistant adhesive properties, and initial adhesive strength of an adhesive containing a latex composition. As for the chloroprene polymer latex, a chloroprene polymer constituting the chloroprene polymer latex preferably has a gel content (toluene-insoluble content) of 30% by mass or less, and a toluene-soluble component in the chloroprene polymer preferably has a number average molecular weight of 200,000 to 500,000 and a molecular weight distribution (Mw/Mn) of 2.0 to 4.0.

The chloroprene polymer latex can be prepared as any of anionic, nonionic, and cationic latexes depending on an emulsifier or a dispersant used for emulsion polymerization of a monomer. When used as a raw material of an adhesive, the chloroprene polymer latex is preferably prepared as an anionic latex from the viewpoint of initial adhesive strength. The anionic latex is a latex prepared by emulsion polymerization of a monomer mainly with an anionic emulsifier or dispersant.

Examples of the anionic emulsifier or dispersant include alkali metal salts of rosin acid, alkyl sulfonates having 8 to 20 carbon atoms, alkylaryl sulfates, condensates of sodium naphthalene sulfonate and formaldehyde, sodium alkyl diphenyl ether disulfonate.

The anionic emulsifier or dispersant is most preferably rosin acid, and any of wood rosin acid, gum rosin acid, tall oil rosin acid, and a disproportionated rosin acid prepared by disproportionation of such a rosin acid derivative can be used. The emulsion polymerization method using rosin acid is performed in a high alkaline condition, and thus the rosin acid is present in an alkali metal salt form in a chloroprene polymer latex. Accordingly, rosin acid can also be used in the form of an alkyl metal salt of rosin acid. The amount of a salt of rosin acid is preferably 0.5 to 10 parts by mass and more preferably 2 to 6 parts by mass relative to 100 parts by mass of all simple substances used. When the amount is less than 0.5 part by mass, emulsification is likely to be insufficient, which is likely to cause problems including poor control of heat generated by polymerization, formation of agglomerates, and poor appearance of a product. When the amount is more than 10 parts by mass, a remaining emulsifier is likely to cause problems including poor water resistance of a polymer, lower adhesive strength, insufficient foaming at the time of drying, and poor color tone of a product.

When used, rosin acid is preferably used in combination with a sulfate or sulfonate anionic emulsifier or dispersant in order to stabilize a chloroprene polymer latex after addition of a pH adjustor. In this case, the amount of an anionic emulsifier or dispersant except rosin acid is preferably 0.05 to 5 parts by mass and more preferably 0.1 to 2 parts by mass relative to 100 parts by mass of all simple substances used.

The anionic emulsifier or dispersant can also be used in combination with a nonionic emulsifier or dispersant. When a nonionic emulsifier is used in combination, the low-temperature stability of a latex or the adhesion characteristics of an adhesive to be produced can be improved. When a nonionic or cationic emulsifier or dispersant is singly used as the emulsifier or dispersant for emulsion polymerization, an aqueous adhesive prepared by adding a pH adjustor may fail to be sufficiently destabilized, and may express insufficient initial adhesive strength.

The chloroprene polymer constituting the chloroprene polymer latex can be a homopolymer of chloroprene or can be a copolymer of chloroprene with another copolymerizable monomer such as 2,3-dichloro-1,3-butadiene, 1-chloro-1,3-butadiene, butadiene, isoprene, styrene, acrylonitrile, acrylic acid and an ester thereof, and methacrylic acid and an ester thereof as long as an intended performance of the present invention is not impaired. Specifically, a copolymer containing 2,3-dichloro-1,3-butadiene, 1-chloro-1,3-butadiene, butadiene, isoprene, styrene, acrylonitrile, an acrylic ester, or a methacrylic ester in an amount of 0.01 to 20% by mass or containing acrylic acid or methacrylic acid in an amount of 0.01 to 7% by mass can be used. As for the monomer constituting a copolymer, two or more types of monomers can be used as needed. A mixture of two or more types of monomers can be used. Specifically, the chloroprene polymer constituting the chloroprene polymer latex is preferably a chloroprene homopolymer, a copolymer of chloroprene and 2,3-dichloro-1,3-butadiene, or a mixture of a chloroprene homopolymer and a copolymer of chloroprene and 2,3-dichloro-1,3-butadiene from the viewpoint of high adhesive strength expression. When a copolymer contains another copolymerizable monomer at a content of more than 20% by mass together with chloroprene, the initial adhesive strength or the contact properties deteriorate, and thus such a condition is unfavorable.

As a chain transfer agent for adjusting a molecular weight or a molecular weight distribution, long-chain alkyl mercaptans such as n-dodecyl mercaptan and t-dodecyl mercaptan and dialkyl xanthogen disulfides such as diisopropyl xanthogen disulfide and diethyl xanthogen disulfide are used, for example, but the chain transfer agent is not limited to them. The dialkyl xanthogen disulfide destabilizes a polymer terminal to form an active site for cross-linking, which makes it difficult to control the molecular weight or the gel content. A long-chain alkyl mercaptan is thus more preferably used. Two or more of these chain transfer agents can be used.

In the chloroprene polymer latex, the polymerization conversion rate of a material monomer to a chloroprene polymer is not fundamentally limited, but is preferably not less than 65% by mass and less than 90% by mass. When the polymerization conversion rate is less than 65%, a polymer latex has a lower solid content, and the drying process after application of an adhesive may be burdened, or an adhesion layer may be difficult to equalize. In addition, a remaining monomer may cause problems of odor or deterioration of tackiness or adhesive strength. When the polymerization conversion rate is 90% by mass or more, a polymer may have more branches or have a larger molecular weight to result in a wider molecular weight distribution, and this may cause problems of deterioration of contact properties and water resistance, which are important properties in the present invention. When used, a polymer having a conversion ratio of 90% by mass or more is preferably used as an auxiliary component for a polymer having a conversion ratio of less than 90% by mass. The polymerization conversion rate (% by mass) is determined in accordance with [(polymer mass/total mass of monomers) × 100].

The chloroprene polymer can be polymerized at a temperature ranging from 5 to 45°C, but low temperature polymerization at 5 to 20°C is particularly preferred. It is typically known that trans-1,4-bonds account for 85% or more, and the molecular structure thereof has a comparatively high regularity. Due to the high regularity of the molecular structure, the chloroprene polymer has the nature as a typical crystalline polymer. In particular, when polymerization is performed at a low temperature of 5 to 20°C, the rate of trans-1,4-bond in a polychloroprene molecule is further increased, and this can increase the crystallization speed to achieve sufficient adhesive strength of an aqueous adhesive to be produced. From the view point of an increase of the crystallization speed, a combination use of a monomer that impairs the regularity of a molecular structure other than chloroprene is also unfavorable, and thus, if used, such a monomer should be used in such a small amount as not to impair the adhesive strength as much as possible.

As the initiator for polymerization, a common radical polymerization initiator can be used. For example, for emulsion polymerization, a common organic or inorganic peroxide such as benzoyl peroxide, potassium persulfate, and ammonium persulfate or an azo compound such as azobisisobutyronitrile is used. In addition, a catalytic promoter such as an anthraquinone sulfonate, potassium sulfite, and sodium sulfite can be appropriately used in combination.

In a common production of a chloroprene polymer, a polymerization terminator is added to stop the reaction when a predetermined polymerization degree is achieved, in order to give a polymer having an intended molecular weight and distribution. The polymerization terminator is not limited to particular terminators, and specifically, phenothiazine, p-t-butylcatechol, hydroquinone, hydroquinone monomethyl ether, and diethylhydroxylamine can be used, for example.

The solid content concentration of the chloroprene polymer emulsion in the chloroprene polymer latex is not limited to particular values, but is typically 40 to 65% by mass. The rate of the chloroprene polymer latex in the chloroprene polymer latex of the present invention is 50 to 85% by mass in terms of solid content. When the rate is less than 50% by mass, an adhesive layer fails to have a soft texture, and no synergistic effect by the addition of the acrylic polymer latex described later is provided. When the rate is more than 85% by mass, the storage stability may deteriorate, or the initial adhesive strength may be impaired, without the addition of the pH adjustor described later.

The chloroprene polymer is commonly likely to be degraded by oxygen. In the present invention, an appropriate stabilizer such as an antioxidant and an acid acceptor is preferably used as long as the advantageous effects of the invention are not impaired.

By adding 0.01 to 5% by mass of an acid acceptor or 0.1 to 3% by mass of an antioxidant to the chloroprene polymer, a composition that gives a cross-linked film having flexibility with higher temporal stability is obtained. When a raw material to be used in the chloroprene polymer latex is water-insoluble or destabilizes the colloidal state of the polymer latex, an aqueous dispersion is previously prepared and then is added to the polymer latex.

The acid acceptor added to the chloroprene polymer latex is not limited to particular acceptors, but is specifically exemplified by zinc oxide and hydrotalcite (manufactured by Kyowa Chemical Industry Co., Ltd., DHT-4A, DHT-6, for example). Two or more of these acid acceptors can be used in combination. The amount of the acid acceptor is preferably 0.01 to 5% by mass and more preferably 0.05 to 1% by mass relative to the solid content of the chloroprene polymer latex (chloroprene polymer). When the amount is less than 0.01% by mass, eliminated hydrochloric acid generated from a polymer after use in an adhesive composition is insufficiently neutralized. When the amount is more than 5% by mass, the tackiness or adhesive strength deteriorates. In addition, a polymer latex composition has poor colloidal stability, which is likely to cause problems including sedimentation.

(B) Acrylic polymer latex containing acrylic polymer having glass transition temperature of -40 to -10°C (hereinafter called "acrylic polymer latex")

The acrylic polymer latex is added in order to maintain the initial adhesive strength of an adhesive including a latex composition as well as to control the storage stability thereof and the texture (hardness) of an adhesive layer.

In general, when a chloroprene polymer latex and an acrylic polymer latex are mixed, the colloidal stability deteriorates, and this is likely to cause agglomeration or sedimentation, for example.

In the present invention, an acrylic polymer latex having a glass transition temperature of -40 to -10°C is used in order to prevent the colloidal stability from deteriorating. Such an acrylic polymer latex is prepared by (co)polymerizing an (meth)acrylic ester together with a functional group-containing monomer, a monomer having a crosslinkable group at ordinary temperature and/or another copolymerizable monomer, as needed.

Examples of the (meth)acrylic ester include methyl (meth)acrylate, ethyl (meth)acrylate, butyl (meth)acrylate,

2-ethylhexyl (meth)acrylate, glycidyl (meth)acrylate, propyl (meth)acrylate, stearyl (meth)acrylate, and benzyl (meth)acrylate. These esters can be used singly or as a mixture of two or more of them.

Examples of the functional group-containing monomer include (meth)acrylic acid, maleic acid, itaconic acid, 2-hydroxyethyl (meth)acrylate, dimethylaminoethyl methacrylate, 1,6-hexanediol acrylate, and allyl methacrylate. These monomers can be used singly or as a mixture of two or more of them. The content of the functional group-containing monomer in a copolymer is preferably 7% by mass or less and more preferably 5% by mass or less. When the content is more than 7% by mass, a product may be unstable and is likely to form a gel in some cases.

Examples of the monomer having a crosslinkable group at ordinary temperature include hydrazine derivatives such as adipic acid dihydrazide, glutaric acid dihydrazide, isophthalic acid dihydrazide, oxalic acid dihydrazide, malonic acid dihydrazide, succinic acid dihydrazide, sebacic acid dihydrazide, maleic acid dihydrazide, fumaric acid dihydrazide, itaconic acid dihydrazide, ethylene-1,2-dihydrazine, propylene-1,3-dihydrazine, and butylene-1,4-dihydrazide. These monomers can be used singly or as a mixture of two or more of them. The content of the monomer unit having a crosslinkable group at ordinary temperature in a copolymer is preferably 10% by mass or less. When the content is more than 10% by mass, the effect of improving the initial adhesive strength may be reduced.

Examples of the another copolymerizable monomer include (meth)acrylonitrile, styrene, vinyl acetate, and allyl alcohol. These monomers can be used singly or as a mixture of two or more of them. The content of the another copolymerizable monomer unit in a copolymer is preferably 10% by mass or less and more preferably 5% by mass or less. When the content is more than 10% by mass, a product may be unstable and is likely to form a gel in some cases.

The acrylic polymer latex is prepared by polymerizing such a monomer component in accordance with a known emulsion polymerization method. As for the emulsion polymerization conditions, 100 to 900 parts by weight of water is used relative to 100 parts by weight of all monomer components, and polymerization is performed typically at a polymerization temperature of 10 to 90°C, preferably 40 to 80°C, and commonly for 3 to 15 hours.

The acrylic polymer in the acrylic polymer latex has a glass transition temperature of -40 to -10°C and preferably -35 to -15°C. When the glass transition temperature is less than -40°C, the cohesive power is reduced and thus the initial adhesive strength deteriorates. When the glass transition temperature is more than -10°C, the tackiness is lost, and the initial adhesive strength and contact properties deteriorate markedly.

The glass transition point of an acrylic polymer latex is a value determined by using a differential scanning calorimeter (DSC) manufactured by Rigaku Corporation under the following conditions.

1. About 5 g of an acrylic latex (in terms of solid content) is spread on a glass plate and dried at 25°C for 7 days, giving a polymer film.
2. The glass transition point of the obtained dry film is determined. Specifically, the measurement was performed with a sample amount of 20 mg in a nitrogen atmosphere at a temperature increase rate of 20°C/min.

The solid content concentration of the acrylic polymer latex is not limited to particular values, but is typically 35 to 65% by mass. The rate of the acrylic polymer latex in the chloroprene polymer latex composition of the present invention is 15 to 50% by mass in terms of solid content. When the rate is less than 15% by mass, an adhesive layer fails to have a soft texture. When the rate is more than 50% by mass, no synergistic effect by the addition of the acrylic polymer latex to the chloroprene polymer latex described above is provided, and the initial adhesive strength markedly deteriorates.

The viscosity of the acrylic latex used in the present invention is not limited to particular values, but is preferably 1,000 mPa·s or less from the viewpoint of blend workability. The viscosity is a value determined by using a Brookfield viscometer (type BM manufactured by Tokyo Keiki, Inc.) with a No. 2 rotor at 25°C.

Such an acrylic resin latex is exemplified by AE-337 (commercial product) manufactured by Emulsion Technology Co., Ltd., Nipol LX874 (commercial product) manufactured by Zeon Corporation, and FK-474 (commercial product) manufactured by Chuorika.

(C) pH Adjustor

The pH adjustor is added in order to improve the initial adhesive strength or storage stability of a latex composition. As the pH adjustor, a weak acid or a buffer can be used, and boric acid or at least one compound selected from amino acids having an isoelectric point of 5.5 to 6.5 is used.

The amino acid having an isoelectric point of 5.5 to 6.5 is specifically exemplified by glycine (5.97), alanine (6.00), threonine (6.16), and proline (6.30). From the viewpoint of cost, adhesive performance, ease in handling, and other properties, glycine, which is an amino acid, is preferably used.

The amount of the pH adjustor is not limited to particular values, but such an amount as to enable an adhesive composition to have a pH of 7 to 10 is intended to be used. More preferably, the pH is desirably adjusted within a range from 8 to 10.

When used as the pH adjustor, boric acid is preferably used as an aqueous solution having a concentration of 5% due to ease in handling. When used as the pH adjustor, glycine is preferably used in an amount of 1 to 20 parts by mass, more preferably 2 to 16 parts by mass, and even more preferably 3 to 13 parts by mass relative to 100 parts by mass of a chloroprene polymer latex (solid content). When the pH adjustor is used in an excessively small amount, sufficient adhesive strength is not expressed, and the storage stability deteriorates. When the pH adjustor is used in an excess amount, the cost increases, agglomerates are generated at the time of addition, or the storage stability deteriorates.

The latex composition of the present invention may contain, in addition to the above components (A), (B), and (C), (D) 1 to 20 parts by mass of a plasticizer represented by General Formula (1).

[Chemical Formula 1]

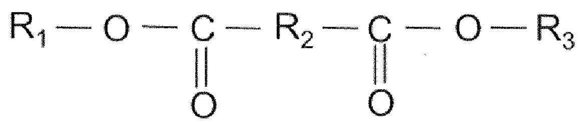

(1)

(In the formula, $R_1$ and $R_3$ are an aliphatic alkyl group having 1 to 3 carbon atoms or a hydrogen atom; $R_1$ and $R_3$ may be the same structure or different structures; and $R_2$ is an aliphatic alkyl group having 5 to 20 carbon atoms)

By adding the above plasticizer, an adhesive layer to be obtained can have a soft texture, or the adhesive strength can be maintained even when the open time (O.T.) is extended.

The amount of the plasticizer represented by General Formula (1) is preferably 1 to 20 parts by mass, more preferably 2 to 15 parts by mass, and even more preferably 5 to 10 parts by mass relative to 100 parts by mass of the latex composition (solid content). A latex composition containing the plasticizer in a small amount may give a lower adhesive strength when the open time is extended. A latex composition containing the plasticizer in a large amount may give a lower initial adhesive strength or be disadvantageous in cost.

The latex composition of the present invention preferably contains (E) a hindered phenol antioxidant. The hindered phenol antioxidant has an effect of improving discoloration or hygiene of a glueline when the latex composition is made into an adhesive. Examples of the hindered phenol antioxidant include 2,2'-methylenebis(4-ethyl-6-tert-butylphenol), 2,2'-methylenebis(4-methyl-6-tert-butylphenol), 4,4'-butylidenebis(3-methyl-6-tert-butylphenol), and a butylated reaction product of p-cresol and dicyclopentadiene. The amount of the hindered phenol antioxidant is preferably 0.1 to 3% by mass and more preferably 0.5 to 2% by mass relative to 100 parts by mass of the solid content of the latex composition. When the antioxidant is added in an amount of less than 0.1% by mass, the antioxidant effect is insufficient. When the amount is more than 3% by mass, the tackiness or adhesive strength may deteriorate.

The latex composition of the present invention may appropriately contain additives other than the above, including a filler, a tackifier, a pigment, a coloring agent, a wetting agent, an antifoaming agent, and a thickener as long as the advantageous effects of the invention are not impaired. An additional resin emulsion (latex) may be added accessorily in an amount up to 10% by mass (in terms of solid content) of all the composition. Specific examples of the emulsion include resin emulsions of (modified) vinyl acetate, a mixture of vinyl acetate and acrylic, a mixture of acrylic and styrene, and urethane.

At a pH of less than 9, the colloid of a chloroprene polymer component is destabilized. The acrylic polymer latex typically has a pH of 6.0 to 8. On this account, the latex composition of the present invention is preferably prepared by the following procedure: first, to (A) the chloroprene polymer latex, (C) the pH adjustor is added; and then (B) the acrylic polymer latex is blended. Each auxiliary component is added preferably as an aqueous dispersion liquid.

The latex composition prepared as above can be used as a one-pack aqueous adhesive without treatment.

Preferred adherends of the one-pack aqueous adhesive of the present invention include foams made from polyurethane, an ethylene-vinyl acetate copolymer, polyethylene, and similar materials and water-absorbable adherends such as wood, fabric, and woven fabric.

The polymer latex composition produced under such conditions as described above gives a soft adhesive layer, and can be suitably used as a one-pack aqueous adhesive having excellent initial adhesive strength, contact properties, water resistance, spray coating properties, and storage stability.

## Examples

The present invention will next be specifically described with reference to examples. These examples are not intended to limit the present invention. In the following examples, part and % are based on mass unless otherwise noted.

[Chloroprene polymer latex]

Production of chloroprene polymer latex A

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.06 part of n-dodecyl mercaptan were added. As an initiator, 0.1 part by weight of potassium persulfate was used to polymerize the monomer at 10°C in a nitrogen atmosphere. When the final polymerization degree reached 65%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content concentration of 55% by mass, giving chloroprene polymer latex A. The chloroprene polymer latex A had a gel content of 0%, and the toluene-soluble component (sol) had a number average molecular weight (Mn) of 300,000 and a molecular weight distribution (Mw/Mn) of 2.5.

Production of chloroprene polymer latex B

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.06 part of n-dodecyl mercaptan were added. As an initiator, 0.1 part by weight of potassium persulfate was used to polymerize the monomer at 10°C in a nitrogen atmosphere. When the final polymerization degree reached 70%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content concentration of 55% by mass, giving chloroprene polymer latex B. The chloroprene polymer latex B had a gel content of 5%, and the toluene-soluble component (sol) had a number average molecular weight (Mn) of 300,000 and a molecular weight distribution (Mw/Mn) of 2.5.

Production of chloroprene polymer latex C

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.06 part of n-dodecyl mercaptan were added. As an initiator, 0.1 part by weight of potassium persulfate was used to polymerize the monomer at 10°C in a nitrogen atmosphere. When the final polymerization degree reached 85%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content concentration of 55% by mass, giving chloroprene polymer latex C. The chloroprene polymer latex C had a gel content of 30%, and the toluene-soluble component (sol) had a number average molecular weight (Mn) of 300,000 and a molecular weight distribution (Mw/Mn) of 2.5.

Production of chloroprene polymer latex D

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.06 part of n-dodecyl mercaptan were added. As an initiator, 0.1 part by weight of potassium persulfate was used to polymerize the monomer at 10°C in a nitrogen atmosphere. When the final polymerization degree reached 90%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content

concentration of 55% by mass, giving chloroprene polymer latex D. The chloroprene polymer latex D had a gel content of 40%, and the toluene-soluble component (sol) had a number average molecular weight (Mn) of 300,000 and a molecular weight distribution (Mw/Mn) of 2.5.

Production of chloroprene polymer latex E

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.14 part of n-dodecyl mercaptan were added. As an initiator, 0.1 part by weight of potassium persulfate was used to polymerize the monomer at 10°C in a nitrogen atmosphere. When the final polymerization degree reached 80%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content concentration of 55% by mass, giving chloroprene polymer latex E. The chloroprene polymer latex E had a gel content of 15%, and the toluene-soluble component (sol) had a number average molecular weight (Mn) of 100,000 and a molecular weight distribution (Mw/Mn) of 2.5.

Production of chloroprene polymer latex F

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.10 part of n-dodecyl mercaptan were added. As an initiator, 0.1 part by weight of potassium persulfate was used to polymerize the monomer at 10°C in a nitrogen atmosphere. When the final polymerization degree reached 80%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content concentration of 55% by mass, giving chloroprene polymer latex F. The chloroprene polymer latex F had a gel content of 15%, and the toluene-soluble component (sol) had a number average molecular weight (Mn) of 250,000 and a molecular weight distribution (Mw/Mn) of 2.5.

Production of chloroprene polymer latex G

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.10 part of n-dodecyl mercaptan were added. As an initiator, 0.1 part by weight of potassium persulfate was used to polymerize the monomer at 5°C in a nitrogen atmosphere. When the final polymerization degree reached 80%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content concentration of 55% by mass, giving chloroprene polymer latex G. The chloroprene polymer latex G had a gel content of 15%, and the toluene-soluble component (sol) had a number average molecular weight (Mn) of 300,000 and a molecular weight distribution (Mw/Mn) of 2.0.

Production of chloroprene polymer latex H

In a reaction vessel having an internal volume of 3 L, 100 parts of pure water, 5 parts of sodium rosinate, 0.5 part of potassium hydroxide, 0.3 part of a sodium salt of a condensate of formaldehyde and naphthalenesulfonic acid, and 0.3 part of sodium hydrogen sulfite were placed under a nitrogen stream, and were dissolved. To the solution under stirring, 100 parts of a chloroprene monomer and 0.08 part of n-dodecyl mercaptan were added. As an initiator, 0.1 part by weight of potassium persulfate was used to polymerize the monomer at 10°C in a nitrogen atmosphere. When the final polymerization degree reached 80%, an emulsion of phenothiazine was added to stop the polymerization. An unreacted monomer was removed under reduced pressure, and then to the product under stirring, 0.3 part of a polyoxyalkylene alkyl ether as a low-temperature stabilizer was added relative to 100 parts of solid content. The mixture was concentrated by further evaporating water under reduced pressure, and the product was adjusted to have a solid content concentration of 55% by mass, giving chloroprene polymer latex H. The chloroprene polymer latex H had a gel content of 15%, and the toluene-soluble component (sol) had a number average molecular weight (Mn) of 300,000 and a molecular weight distribution (Mw/Mn) of 4.0.

The gel content of a chloroprene polymer latex, and the number average molecular weight (Mn) and the molecular weight distribution (Mw/Mn) of a toluene-soluble component (sol) were determined by the following procedures.

[Gel content]

Each sample was freeze-dried, and the dried sample was accurately weighed to give X. The sample was dissolved in toluene (adjusted at 0.6%), then subjected to centrifugal separation, and filtered through a 200-mesh wire mesh to separate a gel component. The separated gel component was air-dried and then dried in an atmosphere at 110°C for 1 hour, and the mass was accurately determined to give Y.

The gel content was calculated in accordance with equation (2).

[Equation 1]

$$\text{Gel content} = \frac{Y}{X} \times 100 \qquad (2)$$

[Number average molecular weight (Mn) and molecular weight distribution (Mw/Mn) of toluene-soluble component (sol)]

GPC measurement was performed in the following conditions to determine the molecular weight in terms of polystyrene, and the weight average molecular weight (Mw), the number average molecular weight (Mn), and the molecular weight distribution (Mw/Mn) were determined. The measurement was performed using a 0.1% tetrahydrofuran (THF) solution prepared from the toluene-soluble component (sol) separated in the gel content measurement.

Measurement device: HLC-8120GPC manufactured by Tosoh Corporation

Column for analysis: three columns of TSK-GEL $GMH_{HR}$-H (5 μm) with dimensions of 7.8 mmφ × 300 mm, manufactured by Tosoh Corporation
Guard column: guard column TSK-guard column TSK-guard column $H_{HR}$-H (5 μm) with dimensions of 6 mmφ × 40 mm
Column temperature: 40°C
Solvent: THF (guaranteed grade)
Flow rate: 1 ml/min

[Acrylic polymer latex]

Acrylic polymer latexes I to V used in the chloroprene polymer latexes of Examples and Comparative Examples are the following latexes.

I: AE-337 (Tg = -30°C) (manufactured by Emulsion Technology Co., Ltd.)
II: Nipol LX874 (Tg = -31°C) (manufactured by Zeon Corporation)
III: FK-474 (Tg = -30°C) (manufactured by Chuorika)
IV: AE200A (Tg = -45°C) (manufactured by Emulsion Technology Co., Ltd.)
V: Nipol LX844C (Tg = 32°C) (manufactured by Zeon Corporation)

The pH, the viscosity (mPa·s), the solid content (% by mass), and the glass transition point (Tg) of each of the acrylic polymer latexes I to V were determined by the following procedures, and are shown in Table 1.

[pH]

For the pH of a chloroprene polymer latex or an adhesive composition, the temperature of a chloroprene polymer latex was adjusted at 20°C, and then the pH was determined with a pH meter, type F-22, manufactured by Horiba, Ltd.

[Viscosity]

A Brookfield viscometer (type RB-L80 viscometer: manufactured by Toki Sangyo Co., Ltd) was used to determine a viscosity at 30 rpm, $\eta_{30}$, with a No.1 rotor in conditions of 60 seconds and 25°C.

[Solid content concentration]

The solid content concentration was calculated in accordance with the following expression, where $\alpha$ is the mass of only an aluminum plate, $\beta$ is the mass of an aluminum plate with 2 ml of a polychloroprene latex sample, and $\gamma$ is the mass of an aluminum plate with a latex sample after drying at 110°C for 3 hours.

$$\text{Solid content concentration (\% by mass)} = \{(\gamma - \alpha)/(\beta - \alpha)\} \times 100$$

[Glass transition point (Tg)]

The glass transition point is a value (glass transition temperature) given as a baseline variation determined by using a differential scanning calorimeter (DSC) (EXSTAR6000 DCS6200R, Seiko Instruments Inc). For the measurement of a glass transition point, a sample was allowed to stand at 23°C for 30 minutes; then the temperature was decreased to -100°C at -10°C/min; next the sample was allowed to stand for 10 minutes; and then differential thermal analysis was performed while the sample temperature was increased from -100°C to 100°C at a temperature increase rate of 20°C/min. The measurement conditions other than the temperature increase rate were in accordance with JIS K7121.

[Table 1]

| Acrylic polymer latex | I | II | III | IV | V |
|---|---|---|---|---|---|
| pH | 7.5 | 6.5 | 7.5 | 8.0 | 7.5 |
| Viscosity [mPa • s] | 55 | 20 | ≦ 1000 | 80 | 70 |
| Solid content concentration [% by mass] | 48.5 | 45.0 | 55.0 | 51.0 | 55 |
| Glass transition point (Tg) [°C] | -30 | -31 | -30 | -45 | 32 |

[pH Adjustor]

The pH adjustors a to g used in the aqueous adhesive compositions of Examples and Comparative Examples are the following adjustors.

a. glycine (isoelectric point: 5.97)
b. alanine (isoelectric point: 6.00)
c. threonine (isoelectric point: 6.16)
d. 5% aqueous boric acid solution (prepared by dissolving 5 g of boric acid (powder) in 95 g of pure water)
e. proline (isoelectric point: 6.30)
f. phenylalanine (isoelectric point: 5.48)
g. histidine (isoelectric point: 7.59)

[Preparation of one-pack aqueous adhesive]

To 100 parts by mass (in terms of solid content) of each of the chloroprene polymer latexes A to H, a pH adjustor a to g was added in an amount (parts by mass) shown in Table 2. The obtained mixture was blended with an acrylic polymer latex I to V so as to give such a mixing rate (parts by mass) to the chloroprene polymer latex as shown in Table 2, giving one-pack aqueous adhesives of Examples 1 to 17 and Comparative Examples 1 to 14.

The initial adhesive strength, the spray coating properties, the storage stability, and the adhesive layer texture of each of the obtained one-pack aqueous adhesives were determined by the following procedures, and the test results are shown in Table 2.

[Initial adhesive strength]

Polyurethane foams having a density of 30 kg/m$^3$ (20 mm in thickness × 50 mm in length × 50 mm in width) were used as an adherend, and a one-pack aqueous adhesive obtained was applied by spraying under an atmosphere at 23°C by using a one-pack type spray gun, Iwata W-77 (manufactured by Anest Iwata Corporation) with a nozzle size of 2.5 mm so as to give a coating amount of 70 g/m$^2$. The coated foams were allowed to stand in an atmosphere at 23°C for 1 minute, then the adhesive surfaces of two polyurethane foams were superimposed on each other while the one-pack aqueous adhesive was not completely dried, and the whole was compressed from a thickness of 40 mm to a thickness of 10 mm and kept for 5 seconds. Immediately after the compression, a tensile tester (Autograph manufactured by Shimadzu Corporation: a tensile speed of 200 mm/min) was used to perform tensile test in the perpendicular direction to the adhesive surface, determining the initial adhesive strength (N/cm$^2$). A sample having an initial adhesive strength of 3.0 N/cm$^2$ or more is evaluated as acceptance.

[Spray coating properties]

When a sample for determining the initial adhesive strength was prepared, the coating state of an adhesive and the spray gun state were visually observed. An adhesive giving uniform and even coating was evaluated as ○, whereas an adhesive giving unevenness or dots or causing a spray gun to clog was evaluated as ×.

[Storage stability]

After heat treatment of 250 g of a one-pack aqueous adhesive at 40°C for 7 days, whether the viscosity increased or not was determined, and the state was observed. A one-pack aqueous adhesive having a constant viscosity was evaluated as ○, a one-pack aqueous adhesive whose viscosity was increased was evaluated as Δ, and a one-pack aqueous adhesive that was solidified or generated agglomerates was evaluated as ×.

[Adhesive layer texture]

In the same manner as the evaluation method of initial adhesive strength, polyurethane foams having a density of 30 kg/m$^3$ (20 mm in thickness × 50 mm in length × 50 mm in width) were used as an adherend, and a one-pack aqueous adhesive was applied by spraying under an atmosphere at 23°C so as to give a coating amount of 70 g/m$^2$. The coated foams were allowed to stand in an atmosphere at 23°C for 1 minute, then the adhesive surfaces of two polyurethane foams were superimposed on each other while the one-pack aqueous adhesive was not completely dried, and the whole was compressed from a thickness of 40 mm to a thickness of 10 mm and kept for 5 seconds. The foams were then allowed to stand at 23°C for 24 hours, and the texture of the adhesive layer was evaluated by finger feeling. An adhesive layer having an equal texture to that of the polyurethane foam was evaluated as ○, an adhesive having a slightly harder texture than that of the polyurethane foam was evaluated as Δ, and an adhesive layer having a harder texture than that of the polyurethane foam was evaluated as ×.

[Table 2]

| | | Example | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| Formulation | Chloroprene polymer latex | | | | | | | | | | | | | | | | | |
| | Type | A | B | C | D | E | F | G | H | F | F | F | F | F | F | F | F | F |
| | Blending rate | 75 | 75 | 75 | 75 | 75 | 75 | 75 | 75 | 50 | 85 | 75 | 75 | 75 | 75 | 75 | 75 | 75 |
| | Acrylic polymer latex | | | | | | | | | | | | | | | | | |
| | Type | I | I | I | I | I | I | I | I | I | I | II | III | I | I | I | I | I |
| | Blending rate | 25 | 25 | 25 | 25 | 25 | 25 | 25 | 25 | 50 | 15 | 25 | 25 | 25 | 25 | 25 | 25 | 25 |
| | pH adjuster | | | | | | | | | | | | | | | | | |
| | Type | a | a | a | a | a | a | a | a | a | a | a | a | b | c | d | e | a |
| | Blending amount | 4 | 4 | 4 | 4 | 4 | 4 | 4 | 4 | 4 | 4 | 4 | 4 | 4 | 4 | 4 | 4 | 6 |
| Evaluation | Initial adhesive strength (N/cm$^2$) | 4.8 | 4.8 | 4.5 | 4.0 | 4.9 | 5.1 | 5.4 | 5.1 | 3.4 | 5.2 | 5.1 | 4.4 | 4.7 | 4.5 | 4.4 | 4.4 | 4.5 |
| | Spray coating properties | ○ | ○ | ○ | ○ | ○ | ○ | ○ | ○ | ○ | ○ | ○ | ○ | ○ | ○ | ○ | ○ | ○ |
| | Storage stability | ○ | ○ | ○ | ○ | ○ | ○ | ○ | ○ | ○ | ○ | ○ | ○ | ○ | ○ | ○ | ○ | ○ |
| | Adhesive layer texture | ○ | ○ | ○ | ○ | ○ | ○ | ○ | ○ | ○ | ○ | ○ | ○ | ○ | ○ | ○ | ○ | ○ |

[Table 3]

| | | Comparative Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Formulation | Chloroprene polymer latex | | | | | | | | | | | | | | |
| | Type | F | F | F | F | F | F | F | F | F | F | F | F | F | F |
| | Blending rate | 45 | 90 | 45 | 90 | 75 | 75 | 75 | 75 | 75 | 75 | 75 | 75 | 75 | 75 |
| | Acrylic polymer latex | | | | | | | | | | | | | | |
| | Type | I | I | I | I | I | I | I | I | IV | V | IV | V | I | I |
| | Blending rate | 55 | 10 | 55 | 10 | 25 | 25 | 25 | 25 | 25 | 25 | 25 | 25 | 25 | 25 |
| | pH adjuster | | | | | | | | | | | | | | |
| | Type | a | a | d | d | a | a | d | d | a | a | d | d | f | g |
| | Blending amount | 4 | 4 | 4 | 4 | 2 | 8 | 2 | 8 | 4 | 4 | 4 | 4 | 4 | 4 |
| Evaluation | Initial adhesive strength ($N/cm^2$) | 2.8 | 4.3 | 2.5 | 3.9 | 4.2 | 5.0 | 3.1 | 4.4 | 1.2 | 3.2 | 1.1 | 2.9 | Unavailable for evaluation | |
| | Spray coating properties | ○ | × | ○ | ○ | × | × | ○ | × | ○ | ○ | ○ | ○ | | |
| | Storage stability | ○ | × | ○ | × | × | × | × | × | ○ | ○ | ○ | ○ | | |
| | Adhesive layer texture | ○ | × | ○ | × | ○ | ○ | ○ | ○ | ○ | × | ○ | × | | |

As shown by the evaluation results in Table 2 and Table 3, the one-pack aqueous adhesives of Examples 1 to 19 having a formulation within the range defined by the present invention had good initial adhesive strength and storage stability and gave an adhesive layer with a soft texture. In contrast, in Comparative Examples 1, 3, 9, 11, and 12 in which components defined by the present invention were included but a formulation rate was out of the defined range, the initial adhesive strength was insufficient. In Comparative Examples 2 and 4 to 8, the storage stability was insufficient, and in Comparative Examples 2, 4, 10, and 12, the adhesive layer had harder texture than that of the polyurethane foam. In Comparative Examples 13 and 14, agglomerates were generated or a solidification phenomenon occurred when a one-pack aqueous adhesive was prepared, and the evaluation was not able to be performed.

## Claims

1. A method for producing latex composition comprising adding (C) a pH adjustor to (A) a chloroprene polymer latex, and then blending (B) an acrylic polymer latex,
   wherein the latex composition comprises:

   (A) the chloroprene polymer latex;
   (B) the acrylic polymer latex; and
   (C) the pH adjustor,

   wherein (A) the chloroprene polymer latex contains a chloroprene polymer,
   wherein (B) the acrylic polymer latex contains an acrylic polymer having a glass transition temperature of -40 to -10°C,
   wherein (C) the pH adjustor is 3 to 6 parts by mass (in terms of solid content) of boric acid or at least one compound selected from amino acids having an isoelectric point of 5.5 to 6.5,
   wherein the rate of (A) the chloroprene polymer latex in the latex composition is 50 to 85% by mass in terms of solid content, and
   wherein the rate of (B) the acrylic polymer latex in the latex composition is 15 to 50% by mass in terms of solid content.

2. The method for producing latex composition according to claim 1, wherein the chloroprene polymer is a chloroprene homopolymer, a copolymer of chloroprene and 2,3-dichloro-1,3-butadiene, or a mixture of a chloroprene homopolymer and a copolymer of chloroprene and 2,3-dichloro-1,3-butadiene.

3. The method for producing latex composition according to claim 1 or 2, wherein the chloroprene polymer has a gel content (toluene-insoluble content) of 5 to 30% by mass or less, and a toluene-soluble component has a number average molecular weight of 200,000 to 500,000 and a molecular weight distribution (Mw/Mn) of 2.0 to 4.0.

4. The method for producing latex composition according to any one of claims 1 to 3, wherein the chloroprene polymer has a polymerization conversion rate of monomer of not less than 65% by mass and less than 90% by mass.

5. The method for producing latex composition according to any one of claims 1 to 4, wherein a dry sheet prepared

by drying the latex composition has a durometer hardness (type A) defined by JIS K 6253-3 of 30 to 80.

## Patentansprüche

1. Verfahren zur Herstellung einer Latexzusammensetzung, umfassend Hinzugeben (C) eines Mittels zur pH-Wert-Einstellung zu (A) einem Chloroprenpolymerlatex, und danach Einmischen (B) eines Acrylpolymerlatex, wobei die Latexzusammensetzung umfasst:

   (A) den Chloroprenpolymerlatex;
   (B) den Acrylpolymerlatex; und
   (C) das Mittel zur pH-Wert-Einstellung,

   wobei (A) der Chloroprenpolymerlatex ein Chloroprenpolymer enthält,
   wobei (B) der Acrylpolymerlatex ein Acrylpolymer mit einer Glasübergangstemperatur von -40 bis -10 °C enthält,
   wobei (C) das Mittel zur pH-Wert-Einstellung 3 bis 6 Masseteile (in Bezug auf den Feststoffanteil) Borsäure oder von mindestens einer Verbindung, ausgewählt aus Aminosäuren mit einem isoelektrischen Punkt von 5,5 bis 6,5, beträgt,
   wobei der Anteil an (A) dem Chloroprenpolymerlatex in der Latexzusammensetzung 50 bis 85 Masse-% in Bezug auf den Feststoffanteil beträgt, und
   wobei der Anteil an (B) dem Acrylpolymerlatex in der Latexzusammensetzung 15 bis 50 Masse-% in Bezug auf den Feststoffanteil beträgt.

2. Verfahren zur Herstellung einer Latexzusammensetzung nach Anspruch 1, wobei das Chloroprenpolymer ein Chloropren-Homopolymer, ein Copolymer aus Chloropren und 2,3-Dichlor-1,3-butadien oder ein Gemisch eines Chloropren-Homopolymers und eines Copolymers aus Chloropren und 2,3-Dichlor-1,3-butadien ist.

3. Verfahren zur Herstellung einer Latexzusammensetzung nach Anspruch 1 oder 2, wobei das Chloroprenpolymer einen Gelanteil (toluolunlöslichen Anteil) von 5 bis 30 Masse-% oder weniger aufweist, und eine toluollösliche Komponente ein Zahlenmittel des Molekulargewichts von 200 000 bis 500 000 und eine Molekulargewichtsverteilung (Mw/Mn) von 2,0 bis 4,0 aufweist.

4. Verfahren zur Herstellung einer Latexzusammensetzung nach einem der Ansprüche 1 bis 3, wobei das Chloroprenpolymer eine Polymerisationsumsatzrate des Monomers von nicht weniger als 65 Masse-% und von weniger als 90 Masse-% aufweist.

5. Verfahren zur Herstellung einer Latexzusammensetzung nach einem der Ansprüche 1 bis 4, wobei eine durch Trocknen der Latexzusammensetzung hergestellte trockene Platte eine durch JIS K 6253-3 definierte Durometer-Härte (Typ A) von 30 bis 80 aufweist.

## Revendications

1. Procédé de production d’une composition de latex comprenant l’ajout de (C) un agent d’ajustement du pH à (A) un latex de polymère de chloroprène, puis le mélange de (B) un latex de polymère acrylique, la composition de latex comprenant :

   (A) le latex de polymère de chloroprène ;
   (B) le latex de polymère acrylique ; et
   (C) l’agent d’ajustement du pH,
   (A) le latex de polymère de chloroprène contenant un polymère de chloroprène,
   (B) le latex de polymère acrylique contenant un polymère acrylique ayant une température de transition vitreuse de -40 à -10 °C,
   (C) l’agent d’ajustement du pH étant constitué par 3 à 6 parties en masse (en termes de teneur en solides) d’acide borique ou d’au moins un composé choisi parmi les acides aminés ayant un point isoélectrique de 5,5 à 6,5,

   le taux de (A) le latex de polymère de chloroprène dans la composition de latex étant de 50 à 85 % en masse en

termes de teneur en solides, et
le taux de (B) le latex de polymère acrylique dans la composition de latex étant de 15 à 50 % en masse en termes de teneur en solides.

**2.** Procédé de production d'une composition de latex selon la revendication 1, dans lequel le polymère de chloroprène est un homopolymère de chloroprène, un copolymère de chloroprène et de 2,3-dichloro-1,3-butadiène, ou un mélange d'un homopolymère de chloroprène et d'un copolymère de chloroprène et de 2,3-dichloro-1,3-butadiène.

**3.** Procédé de production d'une composition de latex selon la revendication 1 ou 2, dans lequel le polymère de chloroprène a une teneur en gel (teneur insoluble dans le toluène) de 5 à 30 % en masse ou moins, et un composant soluble dans le toluène a un poids moléculaire moyen en nombre de 200 000 à 500 000 et une distribution du poids moléculaire (Mw/Mn) de 2,0 à 4,0.

**4.** Procédé de production d'une composition de latex selon l'une quelconque des revendications 1 à 3, dans lequel le polymère de chloroprène a un taux de conversion par polymérisation du monomère supérieur ou égal à 65 % en masse et inférieur à 90 % en masse.

**5.** Procédé de production d'une composition de latex selon l'une quelconque des revendications 1 à 4, dans lequel une feuille sèche préparée par séchage de la composition de latex présente une dureté par duromètre (type A) définie par JIS K 6253-3 de 30 à 80.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 56059874 A
- JP 9188860 A
- JP 2009271802 A
- EP 2508560 A1
- WO 9853019 A1
- US 2009053949 A1
- US 2013245163 A1
- GB 1392614 A
- JP 2006083302 A